# EUROPÄISCHE PATENTSCHRIFT

(11) **EP 3 278 957 B1**
(45) Veröffentlichungstag und Bekanntmachung des Hinweises auf die Patenterteilung: **06.11.2019**
(21) Anmeldenummer: 17181181.3
(22) Anmeldetag: 13.07.2017
(51) Int. Cl.: B29C 65/10, B29C 65/78, B29L 7/00, B29C 65/20

(54) **TRAGBARE TISCHSCHWEISSMASCHINE**
PORTABLE TABLE WELDING MACHINE
MACHINE DE SOUDAGE DE TABLE PORTABLE

(30) Priorität: 05.08.2016 DE 202016104323 U
(43) Veröffentlichungstag der Anmeldung: 07.02.2018
(73) Patentinhaber: Leister Technologies AG, 6056 Kägiswil (CH)
(72) Erfinder: Rieser, Benedikt, 6078 Lungern (CH); Strahl, Falko, 6020 Emmenbrücke (CH); Niederberger, Adolf, 6056 Kägiswil (CH)
(74) Vertreter: Klocke, Peter

(56) Entgegenhaltungen:
- EP-A1- 0 008 362
- DE-C- 732 156
- JP-A- H04 195 179
- JP-A- 2015 190 076
- US-A- 3 720 558
- US-A- 3 932 569
- US-A- 4 319 944

## Beschreibung

Die Erfindung beschreibt eine tragbare Tischschweißmaschine zum Verschweißen von Kunststoffbahnen.

Eine vergleichbare, jedoch nicht als tragbare Tischweißmaschine ausgebildete, Vorrichtung ist aus der DE 732 156 bekannt. Bei dieser ist die obere Anpressrolle heb- und senkbar und die untere Transportrolle fest und mit einem Antrieb versehen ist. Diese Vorrichtung ist hinsichtlich der Gestaltung und Herstellung ähnlich einer Nähmaschine aufgebaut. Die Erwärmung der miteinander zu verschweißenden Materialien erfolgt mittels eines beheizten Keils.

Eine durch US 5 865 942 A bekannte Kunststoff-Schweißmaschine zum Verschweißen von Saumnähten an Kunststofffolien weist einen elektrisch beheizten Heizkeil auf, sowie eine fest mit einer Bodenplatte verbundene S-förmige Materialführhilfe, welche die um den Heizkeil angeordneten Kunststoffbahnen zwischen zwei gegenüberliegende Anpressrollen mit jeweils einem Antrieb führt. Weiterhin weißt die Kunststoff-Schweißmaschine eine hornförmige Ummantelung des Heizkeils auf, die die Kunststofffolien über und unter dem Heizkeil entlang führt. Die Anwendung der Kunststoff-Schweißmaschine auf viele Variationen von beispielsweise Überlappschweißnähten, sowie Finn- und Saumnähten, ist ebenfalls bekannt. Diese bekannten Maschinen sind im Wesentlichen fahrbare Schweißautomaten, die optional an einem festen Standort betrieben werden können.

Zum Stand der Technik wird weiterhin auf die Druckschriften JP 2015 190076 A, US 3 932 569 A, US 3 720 558 A, US 4 319 944 A, EP 0 008 362 A1 und JP H04 195179 A verwiesen.

Die Druckschrift JP 2015 190076 A offenbart eine Klebevorrichtung zum Verbinden von Gewebemateriallagen, mit der Kleber aus einem Vorratsbehälter über wenigstens eine Düse auf mindestens eine der Lagen lokal aufgebracht wird, bevor die beiden Lagen in Kontakt gebracht und zwischen zwei rotierenden zylindrischen Presswalzen hindurchgeführt werden, um diese endgültig miteinander zu verbinden. Dabei ist die wenigstens eine Düse direkt im Einführbereich vor den beiden Presswalzen angeordnet, die einander gegenüber im Abstand veränderbar sind, um einen ausreichenden Anpressdruck zu erreichen, indem der Spalt zwischen den Walzen an Dicke der Gewebemateriallagen angepasst wird.

Die Schrift US 3 932 569 A lehrt ein Verfahren und eine Vorrichtung zur Herstellung eines Packungsmaterials aus aufgeschäumtem Kunststoff in Form von durchgehend offenen Rohrprofilabschnitten zum Schutz empfindlicher Verpackungsgüter in Verpackungsbehältern, bei dem die Rohrprofilabschnitt 8-förmig ausgebildet sind, nach welchem expandierter Kunststoffschaum durch Strangpressen in die Form eines langgestreckten Rohres gebracht und danach in kurze Scheiben zerschnitten wird. Dabei werden gleichzeitig zwei Rohre aus dem Schaumkunststoff getrennt voneinander stranggepresst, im erwärmten weichen Zustand bis zur Berührung ihrer Außenflächen zusammengeführt und fest miteinander verbunden, so daß ihr Gesamtquerschnitt die Form einer 8 erhält. Dazu extrudieren zwei in einem Abstand nebeneinander angeordnete Strangpressköpfe die Rohre, die mittels einer Ziehvorrichtung von der Strangpressvorrichtung abgezogen, mit Reibung von zwei Förderbändern erfasst, zwischen diesen hindurchgeleitet und dann einer Krimpfvorrichtung bestehend aus zwei Krimpfrollen zugeleitet werden, die zum Umlenken, Zusammenführen und Gegeneinanderdrücken und Verbinden der Rohre dient.

Die Druckschrift US 3 720 558 A beschreibt eine Vorrichtung zur Herstellung eines wärmeisolierenden Flächengebildes sowie ein Verfahren zur Herstellung desselben, wobei die Blechplatte gegen Wärme von einer Wärmequelle durch eine Metallfolienkaschierung isoliert wird. Dabei ist die Kaschierung mit der Blechplatte durch eine zwischenliegende Laminierung aus transparentem thermoplastischem Folienmaterial Einwirkung von Hitze und Druck verbunden. Entsprechend werden eine Metallfolie und eine Kunststofffolie als Schichten gleichzeitig übereinander auf die Blechplatte aufgebracht und anschließend eine kontinuierliche verformbare Masse als Andruckgewicht darauf angeordnet, die die Folienschichten fest gegen die Blechplatte drückt, die dann erwärmt wird, sodass die thermoplastische Folie während des Herstellungsprozesses sowohl an der Metallfolie als auch an der Oberfläche der Platte anhaftet. Das Laminat wird danach unter einer Reihe von Druckwalzen zum Verstärken des Verbindungsvorgangs durchgeführt.

Die Schrift US 4 319 944 A offenbart ein Verfahren zum Verstärken eines thermoplastischen Körpers, der aus einem organischen thermoplastischen Polymer besteht, umfassend Extrudieren eines Streifens aus heißem organischen thermoplastischen Polymer und Hindurchführen diese Streifens zusammen mit einem weiteren von einer Rolle abgewickelten überlagerten Gewebestreifens zwischen einer angetriebenen Haspelwalze und einer Druckwalze, wobei beim Durchführen der Gewebestreifen zumindest teilweise in den Polymerstreifen eingebettet und der Verbundstreifen dabei auf der Haspelwalze aufgewickelt wird,

Die Druckschrift EP 0 008 362 A1 lehrt eine Vorrichtung zur ein- oder beidseitigen Randüberhöhung bahnförmiger Thermoplaste, wobei Prägeräder in Prägestationen die Ränder der kontinuierlich durchgeführten Bahn verformen. Die Prägestation besteht zumindest aus einem Prägerad mit Andruckvorrichtung für das Rad und einem darunter befindlichen stationären Ultraschallkopf mit Sonotrode. Das Prägerad wird mittels Gewichten, Luftzylinder, Federn oder in anderer geeigneter Weise auf den Bahnrand und die darunterliegende Sonotrode gedrückt, wobei die Sonotrode des Ultraschallkopfes Nuten in Laufrichtung der Bahn aufweist, wodurch eine doppelseitige Randverdickung in einem Arbeitsgang erreicht wird.

Die Druckschrift JP H04 195179 A beschreibt eine Fixiervorrichtung für eine elektrophotographische Vorrichtung, mit einer Fixierwalze und einer Andruckwalze, zwischen denen ein Papierblatt zum Übertragen eines Toner-Pulverbildes hindurchführbar ist, wobei die Fixierwalze und die Andruckwalze einander gegenüberliegend sich radial berührend angeordnet sind und sich entgegengesetzt drehen, und mit einem Drehantrieb zum Drehen der Fixierwalze und der Andruckwalze sowie mit zwei Ultraschallwellengeneratoren, die an der Fixierwalze befestigt ist. Beim Übertragen des Pulverbildes auf das Papier werden Ultraschallwellen durch die elektronisch gesteuerten Ultraschallwellengeneratoren erzeugt, die das Pulverbild auf dem Papier fixieren.

Der Erfindung liegt die Aufgabe zugrunde eine tragbare Maschine vorzuschlagen, die gegenüber dem Stand der Technik hinsichtlich Handhabbarkeit, Leistungsfähigkeit und einem variablen Einsatz verbessert ist.

Diese Aufgabe wird durch eine Maschine mit den Merkmalen des Anspruchs 1 gelöst. Weitere vorteilhafte Ausgestaltungen sind den rückbezogenen Patentansprüchen zu entnehmen.

Danach besteht die Maschine aus einem Rahmengestell mit einem Trägergehäuse und einem Tragarm, an welchem eine Schweißvorrichtung angeordnet ist, und aus mindestens einer Transportrolle mit einer drehbaren Transportrollen-Achse. Weiterhin ist eine Anpressrolle über einen Exzenter mit einem Trägergehäuse exzentrisch gelagert verbunden, woran wiederum ein Gewicht zur Steuerung des Anpressdrucks der Anpressrolle angeordnet ist. Der Exzenter ist einerseits über eine konzentrisch gelagerte Exzenter-Achse mit dem Trägergehäuse und andererseits über eine exzentrisch gelagerte Anpressrollen-Achse mit der Anpressrolle drehbar verbunden. Der Definition nach ist der Exzenter ein als Verbindung dienendes Werkstück mit zwei parallelen Drehachsen, welches bei Verlagerung die Neigung der beiden Drehachsen nicht verändert, aber auch die Durchführung von vollständigen Umdrehungen um jede der beiden Achsen nicht behindert. So ist die Anpressrolle selbst mit einer, bezüglich der Anpressrolle, konzentrischen Lagerung um die erste der parallelen Drehachsen des Exzenters verbunden, was ein ebenmäßiges Abrollen der Anpressrolle bedingt. Die exzentrische Lagerung wird dadurch erreicht, dass die zweite Drehachse eine konzentrische drehbare Verbindung mit dem Trägergehäuse eingeht. Durch die Verwendung der exzentrisch gelagerten Anpressrolle und der Transportrolle anstelle der üblichen Paare aus Vorschubrollen, die mit elastischem Druck gemäß dem Stand der Technik zusammengepresst werden, kann die Maschine mit gängigen Komponenten kostengünstig realisiert werden.

In einer bevorzugten Ausgestaltung ist an dem Exzenter eine Hebelstange befestigt, an der das Gewicht austauschbar und verschiebbar zur Bestimmung der Anpresskraft der Anpressrolle befestigt angeordnet ist. Ein an dem Exzenter angebrachter Hebel macht die Lage der beiden Parallelachsen zueinander regelbar ohne die Anpressrolle selbst direkt manuell zu bedienen. Eine auf diesen Hebel angewandte Kraft wird direkt auf die frei bewegliche Achse der Anpressrolle, die naturgemäß rechtwinklig zum Hebel angeordnet ist, übertragen und damit ohne Verlust unter Einhaltung der Hebelgesetze auf die vorzugsweise unter der Anpressrolle angeordnete Transportrolle übertragen. Zur Veränderung des Anpressdrucks ist das zuvor definierte Gewicht durch ein Gewicht mit entsprechend höherer oder niederer Masse austauschbar. Das Gewicht ist in Verbindung mit der Hebelstange als Hebel/Handgriff verwendbar, wodurch der Benutzer durch Bedienung zusätzlich dynamisch den Anpressdruck variieren kann. Bei genügend durch die Gewichtskraft des an der Hebelstange befestigten Gewichts verursachten oder durch manuell ausgeübten Anpressdruck ist die Reibung zwischen Transportrolle und Material, sowie zwischen Material und Anpressrolle, ausreichend, um eine gleichförmige Mitführung aller beteiligten Komponenten bei Bewegung lediglich einer der Komponenten, zu gewährleisten. Dies vereinfacht den Aufbau der Maschine hinsichtlich der Aufbringung der erforderlichen Anpresskraft.

In einer weiteren bevorzugten Ausführungsform ist die mindestens eine Transportrolle am Trägergehäuse angeordnet und wird über einen regelbaren Antrieb angetrieben. Die Anordnung aus der mindestens einen regelbar angetriebenen Transportrolle und der mindestens einen über den Exzenter gelagerten Anpressrolle macht die Verwendung von mehreren Motoren für den Transport des Materials zwischen den Rollen, aufgrund der Reibungskraft zwischen Transportrolle und Material, sowie zwischen Material und Anpressrolle, überflüssig. Damit wird die Schweißgeschwindigkeit alleinig über die Regelung der Antriebsgeschwindigkeit der Transportrolle optimal gesteuert. Diese Anordnung kommt somit ohne angetriebene Anpressrolle aus, was ebenfalls der Vereinfachung und Gewichtsreduzierung zu Gute kommt.

Die bevorzugte schwenkbare Anordnung der Schweißvorrichtung an dem Trägergehäuse bedingt die Ausbildung von einer, im Schwenkungsbereich der Schweißvorrichtung befindlichen, Betriebsstellung und einer Bereitschaftsstellung. Dazu kann die Schweißvorrichtung um eine Drehachse, vorzugsweise senkrecht zur Längserstreckung des Tragarmes und im Wesentlichen horizontal schwenkbar gelagert sein. Im Weiteren kann die schwenkbare Anordnung durch ein Kugelgelenk, durch einen mehrgelenkigen Hebelarm oder durch eine bevorzugt horizontal ausgerichtete mechanische oder elektrische Schiebevorrichtung ausgebildet sein. Die Betriebsstellung ist dadurch charakterisiert, dass die Anpressrolle unter Einwirkung der durch das Gewicht einwirkenden Gewichtskraft auf der Transportrolle aufliegt. Weiterhin ist in der Betriebsstellung das Heizelement der Schweißvorrichtung räumlich nah zu der Transportrolle und zu der Anpressrolle angeordnet, derart um ein Erwärmen der Kunststoffbahnen und ein zeitnah erfolgtes Anpressen des Materials zwischen Anpressrolle und Transportrolle, also ausreichend zur Herstellung einer dauerhaften thermoplastischen Verbindung mindestens zweier Lagen von Kunststoffbahnen im Schweißbereich, in dem die Verschweißung stattfindet, zu gewährleisten. Die Bereitschaftsstellung zeichnet sich dadurch aus, dass die Anpressrolle nicht auf der Transportrolle aufliegt und dass aufgrund der Positionierung der Schweißvorrichtung weg von dem Schweißbereich ein ungehinderter Zugriff durch den Benutzer für das Einlegen bzw. Entfernen der Kunststoffbahnen in bzw. aus der Tischschweißmaschine möglich ist.

Die Bewegung der Schweißvorrichtung von der Betriebsstellung in die Bereitschaftsstellung und umgekehrt kann mittels eines geeigneten Gelenks oder eines anderen geeigneten Bewegungselements je nach Schwenkachse ausgestaltet sein. Vorzugsweise ist die Schweißvorrichtung mittels eines elektrischen Hubzylinders bewegbar, der an der Schweißvorrichtung angreift und diese um die Drehachse am Tragarm bewegt. Grundsätzlich kann die Schwenkbarkeit der Schweißvorrichtung auch durch einen pneumatischen Hubzylinder ausgebildet sein, was allerdings das Vorhandensein eines zusätzlichen Druckluftanschlusses erfordert.

In einer weiteren zweckmäßigen Ausführung ist für die Schweißvorrichtung eine integrierte Steuereinrichtung vorgesehen, die ein automatisches ein- und ausschwenken der Schweißvorrichtung bei Beginn und Ende des Schweißvorganges bewirkt, und/oder die den, die Transportrolle antreibenden, regelbaren Antrieb gegenüber dem Ausschwenken der Schweißvorrichtung verzögert ausschaltet, um durch einen so erzeugten Nachlauf Verbrennungen der Kunststoffbahn im Bereich der Schweißnaht zu verhindern. Zur Betätigung des Hubzylinders für den Wechsel der Stellung der Schweißvorrichtung zwischen der Betriebsstellung und der Bereitschaftsstellung kann wahlweise ein Druckknopf oder ein Fußpedal dienen.

In einer vorteilhaften Ausführung ist am Rahmengestell eine Halterung angebracht, die der geordneten Zuführung der Kunststoffbahnen zur Schweißanordnung, bestehend aus Schweißvorrichtung in der Betriebsstellung, Transportrolle und Anpressrolle, dient. Die nachfolgend als Materialführungshilfe bezeichnete Halterung ist so ausgestaltet, dass sie durch einfache Verschiebung bezüglich der Schweißanordnung verschiedene Schweißarten, wie beispielsweise Saumschweißen und Hohlsaumschweißen, jeweils optional mit und ohne Keder, begünstigt. Weiterhin ist an der Materialführungshilfe ein Abstandshalter verschiebbar fixiert angebracht, der gewährleisten soll, dass bei Verschiebung der Materialführungshilfe mindestens ein Rand der Kunststoffbahn in Richtung der Schweißanordnung zeigt. Auf diese Weise wird die Breite des senkrecht zur Schweißrichtung umgelegten Abschnittes der Kunststoffbahn gegenüber des übrigen Abschnittes der Kunststoffbahn bestimmt und die verschiedenen Schweißarten begünstigt. Die Schweißrichtung ist durch die Bewegungsrichtung des zu verschweißenden Materials und durch die vom Material durchlaufene Abfolge aus Materialführungshilfe und der, oben genannten, Schweißanordnung eindeutig vorgegeben.

Vorzugsweise ist die Materialführungshilfe derart gestaltet, dass die Kunststoffbahn in eine längliche Öffnung geführt wird, die in einem Zwischenbereich eine U-Form aufweist, um zwei Abschnitte der Kunststoffbahn übereinander zu legen, so dass ein länglicher Hohlraum entsteht, der auf der einen Seite durch die zusammenhängende Kunststoffbahn begrenzt wird und auf der anderen Seite mit dem Verschweißen des Randes der Kunststoffbahn mit dem, dem Rand gegenüberliegenden, Abschnitt der Kunststoffbahn geschlossen wird. Bei der Durchführung des Saumschweißens ist die Breite des senkrecht zur Schweißrichtung umgelegten Abschnittes der Kunststoffbahn gegenüber des übrigen Abschnittes der Kunststoffbahn so gewählt, dass vor dem Schweißen ebenfalls ein länglicher Hohlraum gebildet wird, jedoch die nach den Schweißvorgang vorhandene Schweißnaht so dicht am umgeschlagenen Rand liegt, dass die Kunststoffbahn keinen Hohlraum mehr aufweist. Die längliche Öffnung in der Materialführungshilfe ist zwecks der Einführung von Kunststoffbahnen an einem Ende offen gestaltet. Am anderen Ende ist die Öffnung geschlossen, wobei davor der Abstandshalter entlang der Öffnung verschiebbar fixiert angebracht ist.

Vorteilhafterweise kann durch eine Bohrung innerhalb des U-förmigen Zwischenbereichs in der Materialführungshilfe optional eine stabförmige Verstärkung für das Keder-Schweißen geführt und in den erzeugten Hohlraum der Kunststoffbahn eingebracht werden. Die Bohrung kann vorzugsweise mit einer röhrenartigen Führung versehen sein, um eine richtungsstabile Einführung der stabförmigen Verstärkung in Schweißrichtung zu gewährleisten.

In einer bevorzugten Verwendung weist die erfindungsgemäße Maschine als Schweißvorrichtung ein Heißluftgerät mit einer Heißluftdüse auf, die vorzugsweise austauschbar ist. Als Heißluftgerät können die üblichen zum Verschweißen von Kunststoffen verwendeten Heißluftgebläse verwendet werden, die sich dafür bewährt haben. Durch die Verwendung eines Heißluftgerätes anstelle der üblichen Heizkeile gemäß dem Stand der Technik kann die Maschine mit gängigen Komponenten kostengünstig realisiert werden. Weiterhin wird durch die bevorzugte Verwendung eines schwenkbar befestigten Heißluftgeräts der manuelle Zugang durch den Benutzer erleichtert. Dies ermöglicht den vorzugsweisen Austausch der Heißluftdüse, die in unterschiedlichen Ausformungen einerseits eine gleichförmige oder gerichtete Erwärmung des Materials vorgibt und andererseits eine optimale Zuführung des Materials zur Transport- und Anpressrolle über eine beispielsweise keilförmige Struktur gewährleistet.

Die vorliegende Erfindung, in den oben dargestellten zweckmäßigen Ausführungen, erweist sich im Vergleich mit dem vorliegenden Stand der Technik als eine einfach handhabbare und leicht zu transportierende Schweißmaschine, die je nach Anwendung wahlweise auf einem Tisch oder einer anderen Trägerstruktur lösbar montiert werden kann. Aufgrund der Verwendung der exzentrisch gelagerten Anpressrolle, kann unter Ausnutzung der Hebelgesetze die Anpresskraft der Anpressrolle reguliert und gleichzeitig der Transport der Kunststoffbahnen nur durch Antrieb der Transportrolle hinreichend gewährleistet werden. Zusätzlich ist die Anpresskraft der Anpressrolle durch manuelle Betätigung der Hebelstange durch den Benutzer während des Schweißvorganges jederzeit steuerbar. Gegenüber der im Stand der Technik verwendeten üblichen pneumatischen, hydraulischen und elektrischen Zylinder oder Federelemente ergibt sich eine erhebliche Gewichtsersparnis, sowie die Möglichkeit eines leichten Austauschs der Komponenten, wodurch der Bereich der möglichen Anwendungen der Schweißmaschine sehr variabel und preisgünstig gestaltet werden kann. Die Steuerung des Schweißvorganges kann bevorzugt über die Regelung der Temperatur, Luftmenge und der Geschwindigkeit der Transportrolle mittels Potentiometer erfolgen. Dadurch ist der Schweißvorgang einfach steuerbar und erweist sich aufgrund der Verwendung eines Heißluftgebläses gegenüber den sonst üblichen Heizkeilen als kostengünstig. Die Ausgestaltung der Materialführungshilfe und aller benachbarten Komponenten begünstigt einen einfachen Wechsel zwischen den Schweißarten (Saum, Hohlsaum und Keder) ohne die Notwendigkeit eines Austauschs der Komponenten. Sie ermöglicht aber auch eine komplette Demontierung und ein Wechsel der Komponenten für eine Anpassung der Führungshilfe für weitere Materialausformungen.

Die Erfindung ist nachfolgend anhand eines in den Figuren dargestellten Ausführungsbeispiels erläutert. Weitere Merkmale der Erfindung ergeben sich aus der folgenden Beschreibung des Ausführungsbeispiels der Erfindung in Verbindung mit den Ansprüchen und den beigefügten Figuren. Die einzelnen Merkmale der Erfindung können für sich allein oder zu mehreren bei unterschiedlichen Ausführungsformen des erfindungsgemäßen tragbaren Schweißgerätes im Rahmen der Ansprüche verwirklicht sein.

Diese zeigen in
- Figur 1: eine schematische Darstellung des Grundaufbaus der Schweißmaschine ohne Materialführungshilfe in der Betriebsstellung;
- Figur 2: eine schematische Darstellung des Grundaufbaus der Schweißmaschine ohne Materialführungshilfe in der Bereitschaftsstellung;
- Figur 3: eine schematische Seitenansicht auf die Schweißmaschine, insbesondere auf die Transportrolle, die Anpressrolle und eine prinzipielle Ausgestaltung der Materialführungshilfe, sowie der angedeuteten Position einer Heißluftdüse;
- Figur 4: eine Detailansicht des Exzenters zur Lagerung der Anpressrolle mit Gewicht und Hebelstange;
- Figur 5: eine Detailansicht der Materialführungshilfe in der Konfiguration für das Saumschweißen, optional mit und ohne Keder;
- Figur 6: eine Detailansicht der Materialführungshilfe in der Konfiguration für das Hohlsaumschweißen, optional mit und ohne Keder.

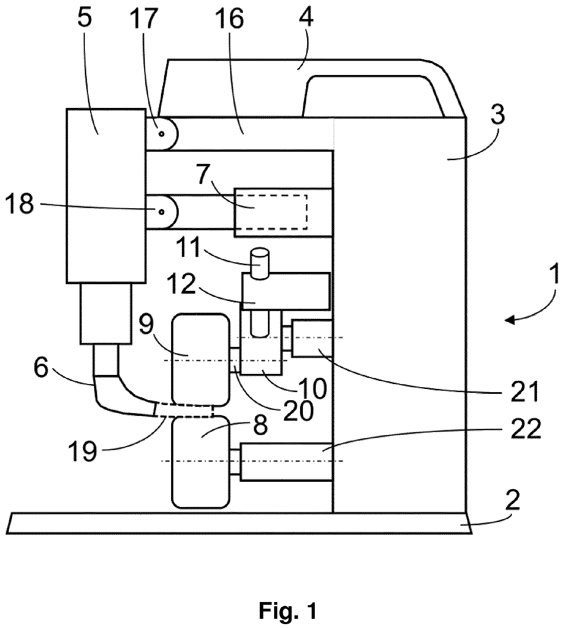

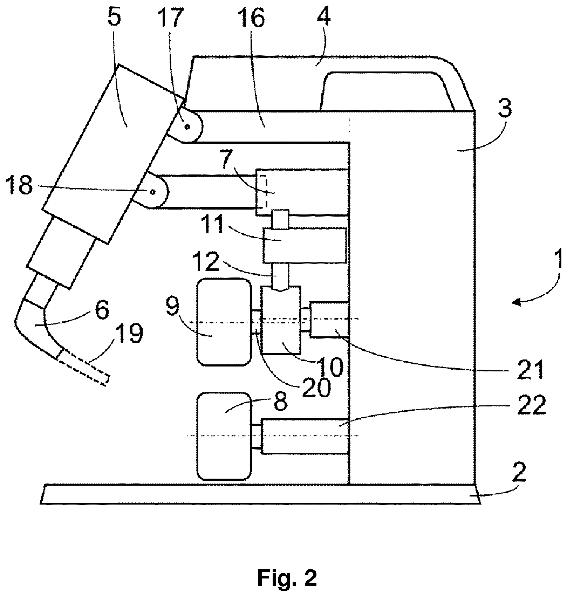

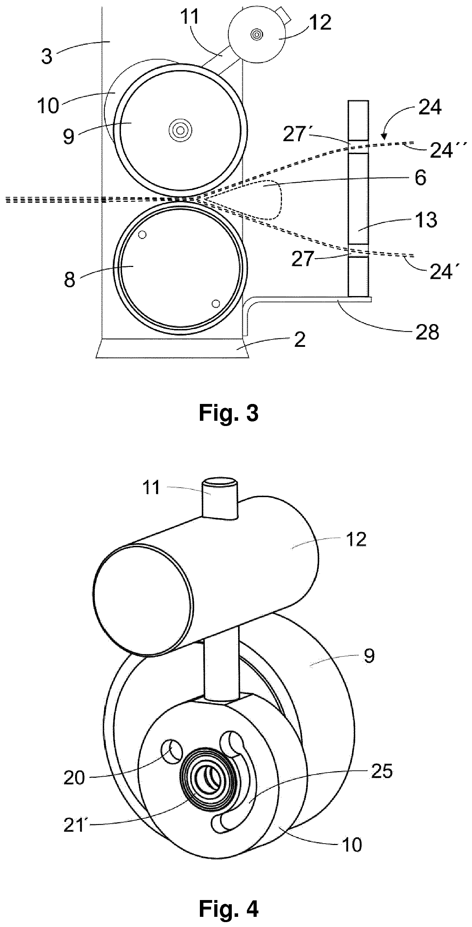

Das in Figur 1 dargestellte tragbare Schweißgerät zum Verschweißen von Kunststoffbahnen ist auf einem Rahmengestell 1 angeordnet, welches aus einer Bodenplatte 2, einem Trägergehäuse 3 und einem Tragarm 16 besteht. Die Bodenplatte 2 kann eine, in der Figur nicht dargestellte, Vorrichtung aufweisen, die es erlaubt, den Apparat optional auf beispielsweise einem Tisch oder einem Standfuß lösbar zu befestigen, beispielsweise über Schraubzwingen oder ähnlich ausgebildete Befestigungsarten. Der am Trägergehäuse 3 befindliche Tragegriff 4 dient dem einfachen Transport und der beliebigen Positionierung auf geeigneten Trägerstrukturen. An dem Tragarm 16 ist über eine obere Schwenkhalterung 17 eine schwenkbar und austauschbar, als Heißluftgerät ausgebildete, Schweißvorrichtung 5 angebracht, deren Stellung innerhalb der Anordnung durch einen elektrischen Hubzylinder 7, der eine Schwenkhalterung 18 ebenfalls an der Schweißvorrichtung 5 angreift, regelbar veränderlich ist. Zur Betätigung des Hubzylinders 7 für den Wechsel der Stellung der Schweißvorrichtung 5 zwischen der Betriebsstellung (Figur 1) und der Bereitschaftsstellung (Figur 2) dient wahlweise ein hier nicht dargestellter Druckknopf oder ein Fußpedal (ebenfalls nicht dargestellt). Das Heißluftgerät 5 besitzt eine austauschbare Heißluftdüse 6 mit luftdurchlässiger Perforation 19, um beispielsweise bei der Durchführung verschiedener Schweißarten, wie Saumschweißen oder Hohlsaumschweißen, jeweils mit und ohne Keder, eine gleichmäßige Erhitzung der Kunststoffbahnen zu gewährleisten, sowie diese nach der Erhitzung dem Kontaktbereich zwischen einer Transportrolle 8 und einer Anpressrolle 9 optimal zuzuführen. Die Transportrolle 8 ist über eine Anpressrollen-Achse 22 drehbar mit dem Trägergehäuse 3 verbunden und wird über einen regelbaren Antrieb betrieben. Damit dient die Transportrolle 8 primär dem Transport des zu verschweißenden Materials entlang der Schweißnaht. Weiterhin wird durch eine, der Transportrolle 8 aufliegende, Anpressrolle 9 die Position der Kunststoffbahnen 24 (Figur 3) innerhalb der Schweißmaschine fixiert und gleichzeitig über einen kurzen Zeitraum, ausreichend zur Herstellung einer dauerhaften thermoplastischen Verbindung der übereinander angeordneten Lagen der Kunststoffbahnen 24, gepresst. Die Anpressrolle 9 selbst ist über eine konzentrisch angeordnete Anpressrollen-Achse 20 drehbar exzentrisch an einem Exzenter 10 angebracht, welcher wiederum durch eine konzentrisch angeordnete Exzenter-Achse 21 drehbar am Trägergehäuse 3 befestigt ist. Dadurch wird es ermöglicht die Lage der Anpressrolle 9 bezüglich der Lage der Transportrolle 8 zu verändern, sodass die Kunststoffbahnen vor, beziehungsweise nach, dem Schweißen zwischen die Anpressrolle 9 und Transportrolle 8 eingelegt, bzw. daraus wieder entfernt, werden kann. Der notwendige Anpressdruck der Anpressrolle 9 auf der Transportrolle 8 wird reguliert, indem an dem Exzenter 10 eine Hebelstange 11 angebracht ist, an der wiederum ein Gewicht 12 lösbar fixiert ist, welches entlang der Längsachse der Hebelstange 11 verschiebbar ist.

Analog zur Darstellung der Schweißmaschine in der Betriebsstellung in Figur 1 zeigt Figur 2 die Anordnung der gleichen Komponenten in der Bereitschaftsstellung. Das Heißluftgerät 5 ist durch das Ausfahren des elektrischen Hubzylinders 7 in eine Lage versetzt, die einen Zugang zur, und ein Auswechseln der, Heißluftdüse 6 erleichtert. Ebenfalls ist die Komponentengruppe bestehend aus Anpressrolle 9, Exzenter 10, Hebelstange 11 und Gewicht 12 derart um die Exzenter-Achse 21 zwischen Exzenter 10 und Rahmengestell 1 gedreht, dass die Anpressrolle 9 nicht auf der Transportrolle 8 aufliegt. Diese Bereitschaftsstellung ermöglicht einen ungehinderten Zugang des Anwenders für das Einlegen bzw. Entfernen der Kunststoffbahnen in bzw. aus der Maschine.

Der Verlauf der in der Maschine eingelegten Kunststoffbahn 24 ist in Figur 3 mit den lang-gestrichelten Linien illustriert. Die Figur 3 zeigt zusätzlich symbolisch eine Heißluftdüse 6 an der während des Schweißvorgangs eingeschwenkten Stelle. Die Schweißrichtung nach obiger Definition verläuft in dieser Seitenansicht von rechts nach links, also wird die Kunststoffbahn 24 in diesem Ausführungsbeispiel in der Komponentenabfolge zuerst durch eine auf einen Träger 28 am Trägergehäuse 3 befestigte Materialführungshilfe 13 geführt, wobei die zwei angedeuteten Aussparungen 27,27' in der Materialführungshilfe 13 in einen U-förmigen Zwischenbereich 26 (Figur 4) übergehen, dessen Scheitelpunkt in Figur 3 hinter der Bildebene, jedoch zwischen den Aussparungen 27,27' liegt. Der breitere Bereich 24' der Kunststoffbahn 24 befindet sich dabei in der unteren Aussparung 27 und der umgeschlagene schmale Bereich 24" der Kunststoffbahn 24 in der oberen Aussparung 27'. Die untere Aussparung 27 ist in dieser Ausführung vor der Bildebene offen, um ein Durchführen der Kunststoffbahn 24 zu gewährleisten. Die obere Aussparung 27' ist in dieser Ausführung vor der Bildebene geschlossen, um ein Verrutschen der Kunststoffbahn 24 zu verhindern und für alle Abschnitte des zu schweißenden Saums bzw. Hohlsaums die gleiche Breite des umgeschlagenen Bereichs 24" zu erhalten. In der Komponentenabfolge wird die Kunststoffbahn 24 nachfolgend um die Heißluftdüse 6 geführt. Im Bereich der Heißluftdüse 6 werden beide Lagen 24',24" der Kunststoffbahn 24 ausreichend erwärmt um eine thermoplastische Verbindung einzugehen. Die erwärmten Lagen 24',24" der Kunststoffbahn 24 werden dann parallel zwischen die angetriebene Transportrolle 8 und die Anpressrolle 9 geführt.

In Figur 4 ist zur gesonderten Ansicht die Baugruppe, bestehend aus Hebelstange 11, Gewicht 12 und Exzenter 10, dargestellt. In diesem Ausführungsbeispiel ist das Gewicht 12 entlang der Längsachse der Hebelstange 11 verschiebbar fixiert, wobei die Hebelstange 11 über ein Schraubgewinde lösbar mit dem Exzenter 10 verbunden sein kann. Die Lage der Anpressrolle 9 ist in dieser Darstellung durch die Anpressrollen-Achse 20 am Exzenter 10 angedeutet und befindet sich damit in dieser Ansicht rechts hinter dem Exzenter 10. Die zentrische Öffnung 21' des Exzenters 10 dient der Aufnahme der hier nicht dargestellten Exzenter-Achse 21, welche den Exzenters 10 mit dem Trägergehäuse 3 drehbar verbindet. In diesem Ausführungsbeispiel ist entlang der zentralen Öffnung 21' eine Nut 25 in Form eines Kreisabschnitts eingefräst, welche zusammen mit einem gegenüber am Trägergehäuse 3 befestigten nicht dargestellten Stift den Drehwinkel des Exzenters 10 auf den durch den Kreisabschnitt definierten Winkelbereich begrenzen kann.

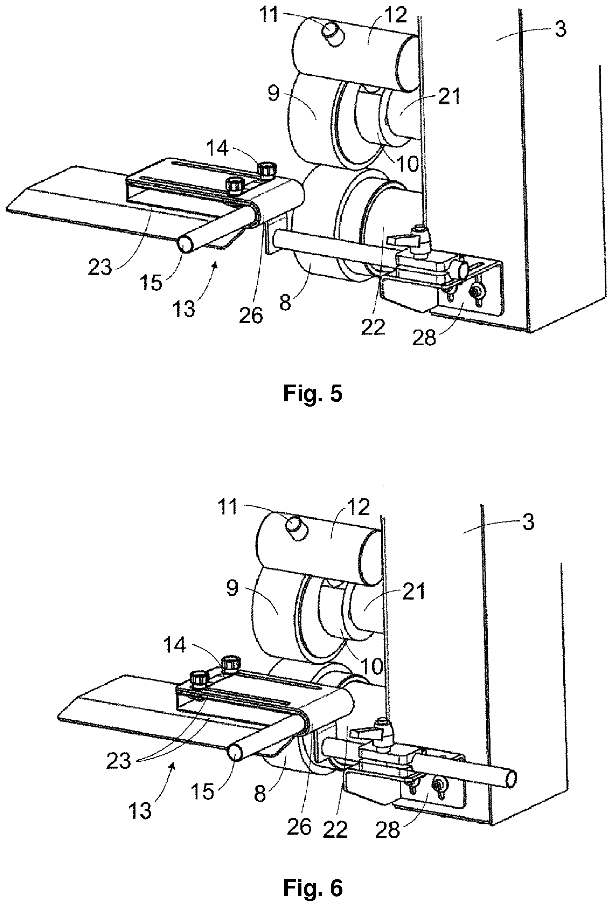

In den Figuren 5 und 6 ist die in diesem Ausführungsbeispiel verwendete Form der Materialführungshilfe 13 in den Grundeinstellungen für das Saumschweißen (Figur 5) und das Hohlsaumschweißen (Figur 6) dargestellt. Dafür ist die Materialführungshilfe 13 über den Träger 28 mit dem Trägergehäuse 3 lösbar verbunden, der eine Verschiebung der Materialführungshilfe 13 senkrecht zur Schweißrichtung, jedoch parallel zu der von der, in der Materialführungshilfe 13 durch die Öffnung 23 eingeführten, Kunststoffbahn 24 definierten Ebene zulässt. Die Schweißrichtung nach obiger Definition verläuft in dieser Ansicht von vorne links nach hinten rechts, bezogen auf die Bildebene. Wird die Materialführungshilfe 13 mit Blickrichtung in Schweißrichtung nach links verschoben (Figur 5), so befindet sich der U-förmige Zwischenbereich 26 der Öffnung 23 an der Materialführungshilfe 13 näher an der durch die Schweißanordnung vorgegebenen Schweißbereich als bei einer Verschiebung der Materialführungshilfe 13 mit Blickrichtung in Schweißrichtung nach rechts (Figur 6). So ist, für eine durch die Öffnung 23 in der Materialführungshilfe 13 geführte hier nicht dargestellte Kunststoffbahn 24, die Breite des länglichen Hohlraums, der auf der einen Seite durch die zusammenhängende Kunststoffbahn 24 begrenzt wird und auf der anderen Seite mit dem Verschweißen des schmalen Bereichs 24" der Kunststoffbahn 24 mit dem, dem breiten gegenüberliegenden Bereich 24' der Kunststoffbahn 24 geschlossen wird, bestimmt. Der verschiebbar und lösbar fixiert an der Materialführungshilfe 13 angebrachte Abstandshalter 14 bestimmt die Breite des senkrecht zur Schweißrichtung umgelegten schmalen Bereichs 24" der Kunststoffbahn 24 gegenüber des übrigen Bereichs 24' der Kunststoffbahn 24 und gewährleistet damit in diesem Ausführungsbeispiel die Einstellung des Abstandes zwischen der Stirnkante des in der Materialführungshilfe 13 umgelegten schmalen Kunststoffbahnbereichs 24" und der parallel dazu verlaufenden nicht dargestellten Schweißnaht. In den Figuren 5 und 6 ist eine rohrförmige Führung 15 innerhalb des U-förmigen Zwischenbereichs 23 in der Materialführungshilfe 13 in diesem Ausführungsbeispiel an Stelle einer Öffnung dargestellt, wodurch die Führung einer stabförmigen Verstärkung für das Keder-Schweißen in den erzeugten Hohlraum der Kunststoffbahn 24 optimiert wird.

## Patentansprüche

1. Tragbare Tischschweißmaschine zum Verschweißen von Kunststoffbahnen (24), umfassend
ein Rahmengestell (1) mit einem Trägergehäuse (3) und einem Tragarm (16), an welchem eine Schweißvorrichtung (5) angeordnet ist, mindestens eine Transportrolle (8) mit einer drehbaren Transportrollen-Achse (22) sowie mindestens eine Anpressrolle (9), die drehbar an dem Trägergehäuse (3) gelagert ist, wobei ein Gewicht (12) an einem Exzenter (10) angeordnet ist, der einerseits über eine konzentrisch gelagerte Exzenter-Achse (21) mit dem Trägergehäuse (3) und andererseits über eine exzentrisch gelagerte Anpressrollen-Achse (20) mit der Anpressrolle (9) drehbar verbunden ist.

2. Tragbare Tischschweißmaschine nach Anspruch 1, **dadurch gekennzeichnet, dass** an dem Exzenter (10) eine Hebelstange (11) befestigt ist, an der das austauschbar und verschiebbar befestigte Gewicht (12) zur Bestimmung der Anpresskraft der Anpressrolle (9) angeordnet ist.

3. Tragbare Tischschweißmaschine nach den Ansprüchen 1 oder 2, **dadurch gekennzeichnet, dass** die mindestens eine Transportrolle (8) am Trägergehäuse (3) angeordnet ist und über einen Steuer- oder regelbaren Antrieb angetrieben wird.

4. Tragbare Tischschweißmaschine nach einem der vorangegangenen Ansprüche, **dadurch gekennzeichnet, dass** die Schweißvorrichtung (5) an dem Trägergehäuse (3) schwenkbar angeordnet ist, wobei für die Schweißvorrichtung (5) im Schwenkungsbereich eine Betriebsstellung und eine Bereitschaftsstellung ausgebildet sind.

5. Tragbare Tischschweißmaschine nach Anspruch 4, **dadurch gekennzeichnet, dass** die Schweißvorrichtung (5) mittels mindestens eines, vorzugsweise elektrischen, Hubzylinders (7) zwischen der Betriebsstellung und der Bereitschaftsstellung bewegbar ist.

6. Tragbare Tischschweißmaschine nach den Ansprüchen 1 bis 5, **gekennzeichnet durch** eine Steuereinrichtung, die ein automatisches ein- und ausschwenken der Schweißvorrichtung (5) bei Beginn und Ende des Schweißvorganges bewirkt, und/oder die den, die mindestens eine Transportrolle (8) antreibenden, regelbaren Antrieb gegenüber dem Ausschwenken der Schweißvorrichtung (5) verzögert ausschaltet.

7. Tragbare Tischschweißmaschine nach einem der vorangegangenen Ansprüche, **gekennzeichnet durch** eine verstellbare Materialführungshilfe (13), die horizontal, senkrecht zur Schweißrichtung, verschiebbar ist und einen an der Materialführungshilfe (13) verschiebbar befestigten Abstandshalter (14) aufweist.

8. Tragbare Tischschweißmaschine nach Anspruch 7, **dadurch gekennzeichnet, dass** die Materialführungshilfe (13) eine Öffnung (23) mit einem U-förmigen Zwischenbereich aufweist, in welche ein Rand einer Kunststoffbahn (24) einführbar ist, sodass die Kunststoffbahn (24) vor dem Schweißvorgang randseitig gefaltet wird und in Schweißrichtung hinter der Materialführungshilfe (13) einen, durch das Schweißen einseitig zu verschließenden, jedoch in und entgegen der Schweißrichtung offenen Hohlraum aufweist.

9. Tragbare Tischschweißmaschine nach den Ansprüchen 7 und 8, **gekennzeichnet durch** eine in Schweißrichtung offene Bohrung (15) im Zwischenbereich der Materialführungshilfe (13) zur Einführung einer stabförmigen Verstärkung in dem durch die, durch die Öffnung (23) geführte, Kunststoffbahn (24) gebildeten Hohlraum.

10. Tragbare Tischschweißmaschine nach einem der vorangegangenen Ansprüche, **dadurch gekennzeichnet, dass** die Schweißvorrichtung (5) als ein Heißluftgerät ausgebildet ist, das eine Heißluftdüse (6) aufweist, die vorzugsweise austauschbar ist.

## Claims

1. A portable table top welder for welding plastic material webs (24), the portable table top welder, comprising a frame (1) including a carrier housing (3) and a support arm (16) at which a welding device (5) is arranged, at least one transport roller (8) including a rotatable transport roller axle (22) and at least one contact pressure roller (9) that is rotatably supported at the carrier housing (3), wherein a weight (12) is arranged at an eccentrical element (10) which is rotatably connected at one side by a concentrically supported eccentrical element axle (21) at the carrier housing (3) and rotatably connected at another side by an eccentrically supported contact pressure roller axle (20) at the contact pressure roller (9).

2. The portable table top welder according to claim 1, **characterized in that** a lever rod (11) is attached at the eccentrical element (10), on which lever rod (11) the exchangeably and displaceably fastened weight (12) for determining the contact force of the pressing roller (9) is arranged.

3. The portable table top welder according to one of claims 1 or 2, **characterized in that** the at least transport roller (8) is arranged at the carrier housing (3) and driven by a controllable or regulatable drive.

4. The portable table top welder according to one of the preceding claims, **characterized in that** the welding device (5) is pivotably arranged at the carrier housing (3), wherein an operating position and a ready position for the welding device (5) is arranged in a pivot range of the welding device.

5. The portable table top welder according to claim 4, **characterized in that** the welding device (5) is movable by at least one advantageously electrical lift cylinder (7) between the operating position and the ready position.

6. The portable table top welder according to one of the claims 1 to 5, **characterized by** a control device which causes an automatic inward pivoting and outward pivoting of the welding device (5) at a beginning and at an end of a welding process and/or which turns off the controllable drive driving the at least one transport roller (8) with a delay relative to an outward pivoting of the welding device (5).

7. The portable table top welder according to one of the preceding claims, **characterized by** an adjustable material support (13), which is movable horizontally, perpendicular to the welding direction, and which includes a spacer (14) that is movably attached at the material support (13).

8. The portable table top welder according to claim 7, **characterized in that** the material support (13) includes an opening (23) with a U-shaped intermediary portion into which an edge of a plastic material web (24) is insertable so that the plastic material web (24) is folded at an edge of the plastic material web before the welding process and includes a cavity in the welding direction downstream of the material support (13), which cavity is closeable on one side by the welding process but open in the welding direction and opposite to the welding direction.

9. The portable table top welder according to claim 7 and 8, **characterized by** a bore hole (15) that is open in the welding direction in an intermediary portion of the material support (13) for insertion of a rod-shaped reinforcement element into a cavity formed by the plastic material web (24) that is guided through the opening (23).

10. The portable table top welder according to one of the preceding claims, **characterized in that** the welding device (5) is designed as a hot-air device which includes a preferably exchangeable hot-air nozzle (6).

## Revendications

1. Machine à souder de table portable pour souder des feuilles continues (24) de matière plastique,
comprenant un cadre (1) avec un boîtier porteur (3) et un bras porteur (16) sur lequel est disposé un dispositif de soudage (5), au moins un rouleau de transport (8) avec un axe rotatif (22) de rouleau de transport, et au moins un rouleau presseur (9) qui est monté à rotation sur le boîtier porteur (3), sachant qu'un poids (12) est disposé sur un excentrique (10) qui est relié à rotation d'un côté au boîtier porteur (3) par l'intermédiaire d'un axe d'excentrique (21) monté concentriquement et de l'autre côté au rouleau presseur (9) par l'intermédiaire d'un axe (20) de rouleau presseur monté excentriquement.

2. Machine à souder de table portable selon la revendication 1, **caractérisée en ce qu'**une tige de levier (11) est fixée sur l'excentrique (10), sur laquelle est disposé le poids (12) fixé avec possibilité de remplacement et de déplacement, destiné à déterminer la force d'application du rouleau presseur (9).

3. Machine à souder de table portable selon la revendication 1 ou 2, **caractérisée en ce que** le rouleau de transport au moins unique (8) est disposé sur le boîtier porteur (3) et est entraîné par l'intermédiaire d'un entraînement pouvant être commandé ou régulé.

4. Machine à souder de table portable selon l'une des revendications précédentes, **caractérisée en ce que** le dispositif de soudage (5) est disposé à pivotement sur le boîtier porteur (3), sachant qu'une position de fonctionnement et une position de disponibilité sont formées dans la plage de pivotement pour le dispositif de soudage (5).

5. Machine à souder de table portable selon la revendication 4, **caractérisée en ce que** le dispositif de soudage (5) peut être déplacé entre la position de fonctionnement et la position de disponibilité au moyen d'au moins un vérin de levage (7), de préférence électrique.

6. Machine à souder de table portable selon les revendications 1 à 5, **caractérisée par** une unité de commande qui produit un pivotement rentrant et un pivotement sortant automatiques du dispositif de soudage (5) au début et à la fin du processus de soudage, et/ou qui désactive de manière retardée par rapport au pivotement sortant du dispositif de soudage (5) l'entraînement pouvant être régulé qui entraîne le rouleau de transport au moins unique (8).

7. Machine à souder de table portable selon l'une des revendications précédentes, **caractérisée par** une aide réglable (13) au guidage de matériau, qui peut être déplacée horizontalement, perpendiculairement au sens de soudage, et présente un écarteur (14) fixé à déplacement sur l'aide (13) au guidage de matériau.

8. Machine à souder de table portable selon la revendication 7, **caractérisée en ce que** l'aide (13) au guidage de matériau présente une ouverture (23) avec une région intermédiaire en forme de U dans laquelle peut être introduit un bord d'une feuille continue (24) de matière plastique, de sorte que la feuille continue (24) de matière plastique est pliée sur le bord avant le processus de soudage et présente, après l'aide (13) au guidage de matériau dans le sens de soudage, une cavité qui peut être fermée sur un côté par le soudage mais qui est ouverte dans le sens de soudage et dans le sens opposé.

9. Machine à souder de table portable selon les revendications 7 et 8, **caractérisée par** un perçage (15), ouvert dans le sens de soudage, dans la région intermédiaire de l'aide (13) au guidage de matériau, afin d'introduire un renforcement en forme de barre dans la cavité formée par la feuille continue (24) de matière plastique dirigée à travers l'ouverture (23).

10. Machine à souder de table portable selon l'une des revendications précédentes, **caractérisée en ce que** le dispositif de soudage (5) est réalisé sous la forme d'un appareil à air chaud qui présente une buse à air chaud (6) qui est de préférence réalisée avec possibilité de remplacement.
